# EUROPEAN PATENT SPECIFICATION

(11) **EP 1 566 530 B1**
(45) Date of publication and mention of the grant of the patent: **23.01.2008**
(21) Application number: 05002520.4
(22) Date of filing: 07.02.2005
(51) Int. Cl.: F02C 7/06, F01D 25/16

(54) **Gas turbine**
Gasturbine
Turbine à gaz

(30) Priority: 19.02.2004 JP 2004043161
(43) Date of publication of application: 24.08.2005
(73) Proprietor: Hitachi Ltd., Tokyo 100-8280 (JP)
(72) Inventor: Kuroki, Hidetoshi c/o Hitachi, Ltd., I. P. Group, Chiyoda-ku Tokyo 100-8220 (JP); Takehara, Isao c/o Hitachi, Ltd., I. P. Group, Chiyoda-ku Tokyo 100-8220 (JP); Murata, Hidetaro c/o Hitachi, Ltd., I. P. Group, Chiyoda-ku Tokyo 100-8220 (JP)
(74) Representative: Beetz & Partner

(56) References cited:
- US-A- 4 147 026
- US-A- 4 561 246
- US-A- 5 161 367
- US-A- 5 201 796

## Description

The present invention relates to a bearing support structure of a gas turbine according to the preamble of claim 1.

In many gas turbines, a bearing for supporting a rotary shaft is generally disposed between a compressor and a turbine (see JP-A-2003-314299).

From document US 4 561 246 there has been known a gas turbine engine having an air cooling system and a bearing compartment. Interconnected casings are provided for a compressor section, a combustion section and a turbine section. A rotor shaft extends axially to connect the rearmost compressor stages with the first turbine stage. A bearing housing extends circumferentially about the rotor shaft to house a bearing in a bearing compartment. The bearing compartment is disposed axially between the compressor and the turbine and is supported by an annular strut, which extends radially inwardly from an inner diffuser casing. The bearing is disposed radially between the shaft and the annular strut.

However, a space between the compressor and the turbine is usually very narrow because combustors are also disposed nearby. Further, when the bearing is disposed in the space between the compressor and the turbine, an oil supplying and discharging pipe for lubrication of the bearing and a pipe for air sealing of the bearing must be disposed in the narrow space. Thus, the arrangement of the bearing between the compressor and the turbine makes the structure more complicated, increases the production cost, and requires a longer time for assembly and disassembly.

It is an object of the present invention to provide a gas turbine which can facilitate the assembly and disassembly work.

To achieve the above object, the gas turbine of the present invention comprises the features of claim 1;

According to the present invention, it is possible to facilitate the assembly and disassembly work, and to increase reliability and stability of the bearing.

### BRIEF DESCRIPTION OF THE DRAWINGS

Fig. 1 is a sectional view showing a cross-section, which is perpendicular to the axial direction, at a position between a compressor and a turbine in one embodiment of a gas turbine according to the present invention;
Fig. 2 is a sectional view taken along the line II-II in Fig. 1;
Fig. 3 is a sectional view taken along the line III-III in Fig. 1;
Fig. 4 is a sectional view taken along the line IV-IV in Fig. 1;
Fig. 5 is a sectional view showing a known bearing support structure in a gas turbine; and
Fig. 6 is a sectional view taken along the line VI-VI in Fig. 5.

### DESCRIPTION OF THE PREFERRED EMBODIMENTS

One embodiment of a gas turbine according to the present invention will be described below with reference to the drawings.

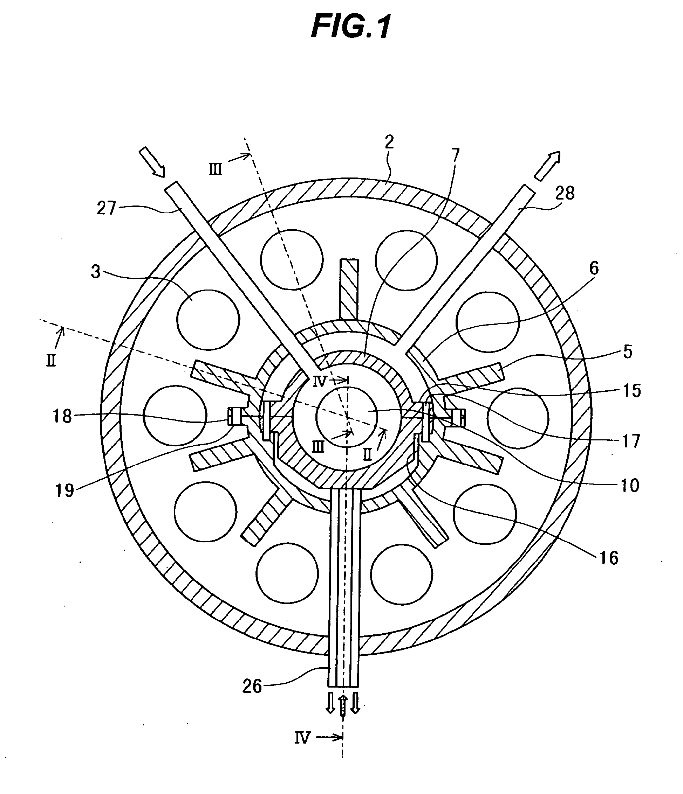

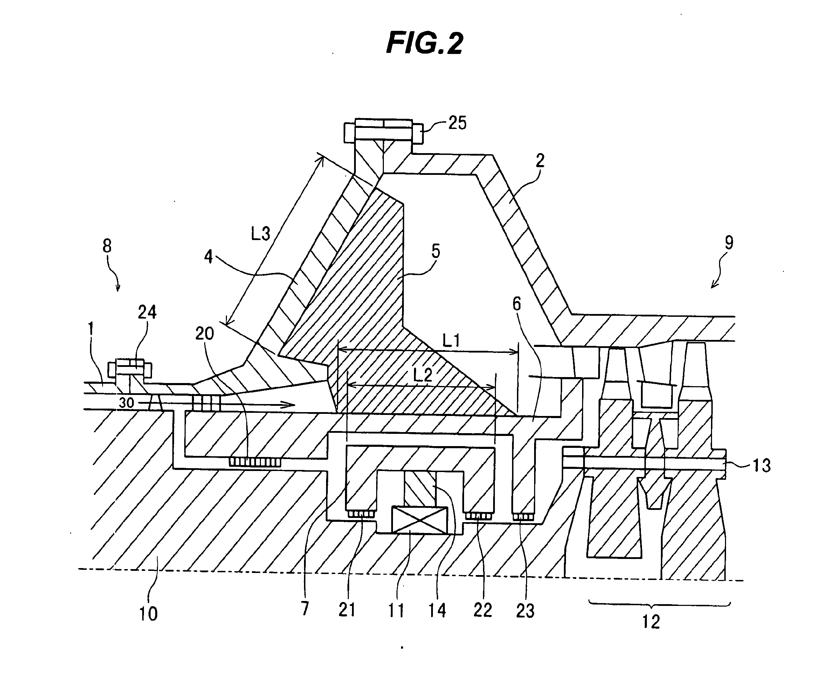

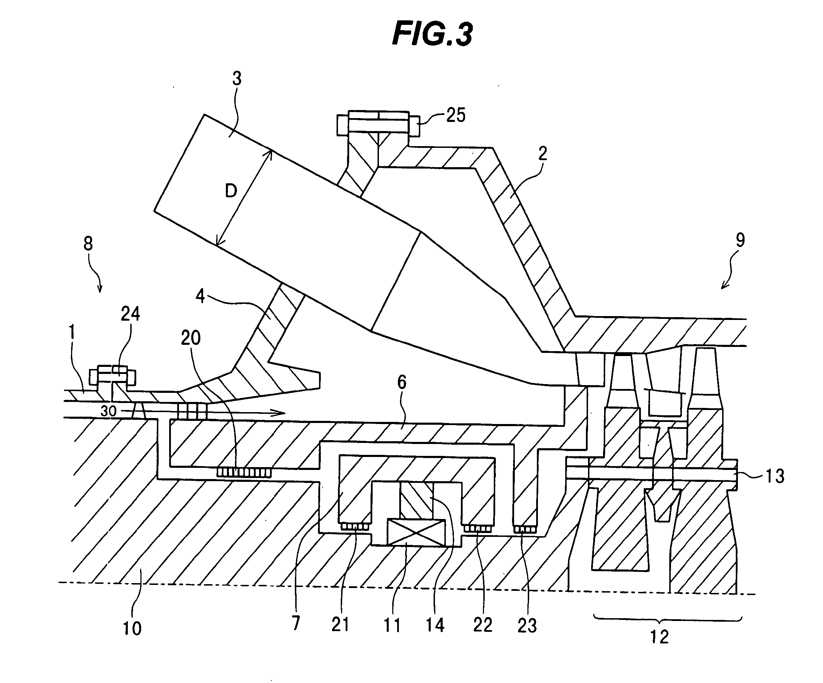

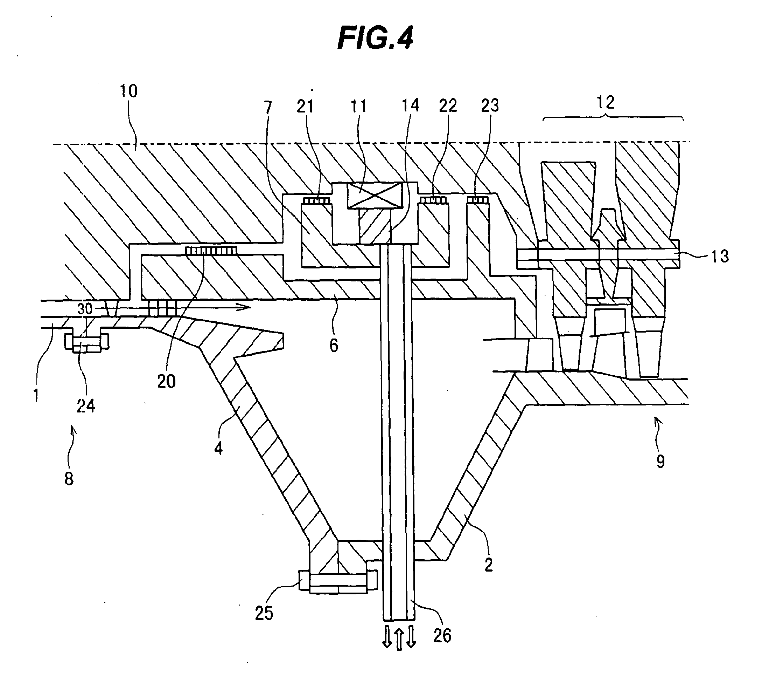

Fig. 1 is a sectional view showing a cross-section of the gas turbine, which is perpendicular to the axial direction, at a position between a compressor and a turbine. Fig. 2 is a sectional view taken along the line II-II in Fig. 1, Fig. 3 is a sectional view taken along the line III-III in Fig. 1, and Fig. 4 is a sectional view taken along the line IV-IV in Fig. 1

Referring to Figs. 1 - 4, a gas turbine of this embodiment comprises a compressor casing 1, a turbine casing 2, a delivery casing 4 positioned between the compressor casing 1 and the turbine casing 2 and holding a plurality of combustors 3 arranged in the circumferential direction, post-shaped struts 5 being integral with the delivery casing 4 and supported only by the delivery casing 4, an inner barrel 6 supported by the struts 5 from the radially outer side, a bearing box 7 supported by the inner barrel 6, and a bearing 11 for journaling (supporting) a shaft 10 disposed between a compressor 8 and a turbine 9, the bearing 11 being supported by the struts 5 through the inner barrel 6 and the bearing box 7.

The shaft 10 is integrally fastened to a turbine shaft 12 of the turbine 9 by stacking bolts 13. This embodiment represents the case in which the shaft 10 disposed between the compressor 8 and the turbine 9 is a compressor shaft (see Fig. 2). Depending on the construction of the gas turbine, however, the shaft 10 between the compressor 8 and the turbine 9 may be the turbine shaft 12, or a joint shaft for coupling respective rotors of the compressor 8 and the turbine 9 to each other.

The bearing 11 for journaling the shaft 10 is covered by the bearing box 7 with a predetermined gap left between them, and it is held with respect to the bearing box 7 through a support member 14. The bearing box 7 has a structure split into two parts in the vertical direction and is covered by the inner barrel 6 with a predetermined gap left between them. The bearing box 7 is provided with flanges 15 projecting along a horizontally extending centerline as shown in Fig. 1. The flanges 15 are supported by engaging portions 16 formed on an inner peripheral surface of the inner barrel 6 and are fastened to the engaging portions 16 by bolts 17 so that the bearing box 7 is fixed to the inner barrel 6. As with the bearing box 7, the inner barrel 6 also has a structure split into two parts in the vertical direction and is provided with flanges 18 projecting along the horizontally extending centerline. The flanges 18 are fastened together by bolts 19 so that the inner barrel 6 is formed into a ring-like shape. In addition, seals 20 to 23 are disposed in gaps between the inner barrel 6 and the shaft 10 and gaps between the bearing box 7 and the shaft 10.

A plurality of struts 5 are arranged at predetermined intervals in the circumferential direction and serve to couple the delivery casing 4 and the inner barrel 6 to each other. In this embodiment, the struts 5 are formed integrally with the delivery casing 4 and the inner barrel 6 by, e.g., casting. As an alternative, however, the delivery casing 4, the struts 5, and the inner barrel 6 may be molded separately from each other and then fastened by, e.g., bolts into an integral structure. The delivery casing 4 is fastened to the compressor casing 1 and the turbine casing 2 by bolts 24, 25, respectively.

The shape and dimensions of each strut 5 are not limited to particular ones, but an axial length L1 of a joined portion of the strut 5 to the inner barrel 6 is preferably set larger than an axial length L2 of the bearing box 7 from the viewpoint of strength. More preferably, as shown in Fig. 2, the bearing box 7 is located within a range of the axial length L1 of the strut 5 such that the joined portion between the strut 5 and the inner barrel 6 completely covers the axial length of the bearing box 7. Further, though not always limited so, it is also preferable from the viewpoint of strength that a length L3 of a joined portion of the strut 5 to the delivery casing 4 in its lengthwise direction is set larger than a diameter D (see Fig. 3) of the combustor 3 so as to completely cover a mounted portion of the combustor 3.

In this embodiment, an even number (10 by way of example) of combustors 3 are held with respect to the delivery casing 4 at predetermined intervals in the circumferential direction (see Fig. 1). When the even number of combustors 3 are held with respect to the delivery casing 4, those combustors 3 are arranged at substantially equal intervals in the circumferential direction such that, as shown in Fig. 1, opposing two of the combustors 3 are positioned on the horizontally extending centerline. Also, when an odd number of combustors 3 are held, those combustors 3 are arranged at substantially equal intervals in the circumferential direction such that one of the combustors 3 is positioned on a vertically extending centerline in the upper half side.

The above-described arrangement of the combustors 3 results in a state that any obstacle (combustors 3) does not exist on the vertically extending centerline at least in the lower half side. Then, in this embodiment, an oil supplying and discharging pipe 26 for supplying and discharging a lubricant to and from the bearing 11 is connected to the bearing box 7 from below in the vertical direction, as shown in Fig. 1, whereby the lubricant can be supplied and discharged to and from the bearing 11 from below in the vertical direction. Furthermore, in this embodiment, an inlet pipe 27 for introducing bearing sealing air and an outlet pipe 28 for discharging the bearing sealing air are disposed in the upper half side of the turbine casing 2 at positions symmetrical in the transverse direction. Thus, the oil supplying and discharging pipe 26, the inlet pipe 27, and the outlet pipe 28 are arranged in a balanced layout in the circumferential direction. While the inlet pipe 27 and the outlet pipe 28 are disposed independently of each other in this embodiment, those pipes may be formed as an integral pipe having a double-wall structure like the oil supplying and discharging pipe 26. In that case, the integral pipe may be connected to the inner barrel 6 and the bearing box 7 from above in the vertical direction, by way of example, so as to provide a balanced arrangement in the circumferential direction with respect to the oil supplying and discharging pipe 26.

In the thus-constructed gas turbine of this embodiment, sucked open air is compressed by the compressor 8, and compressed air 30 flowing as a compressor main stream is supplied to the combustors 3. The compressed air 30 is bunt in the combustors 3 together with fuel, and resulting combustion gases are supplied to the turbine 9, thereby providing motive power to rotate the shaft of the turbine 9.

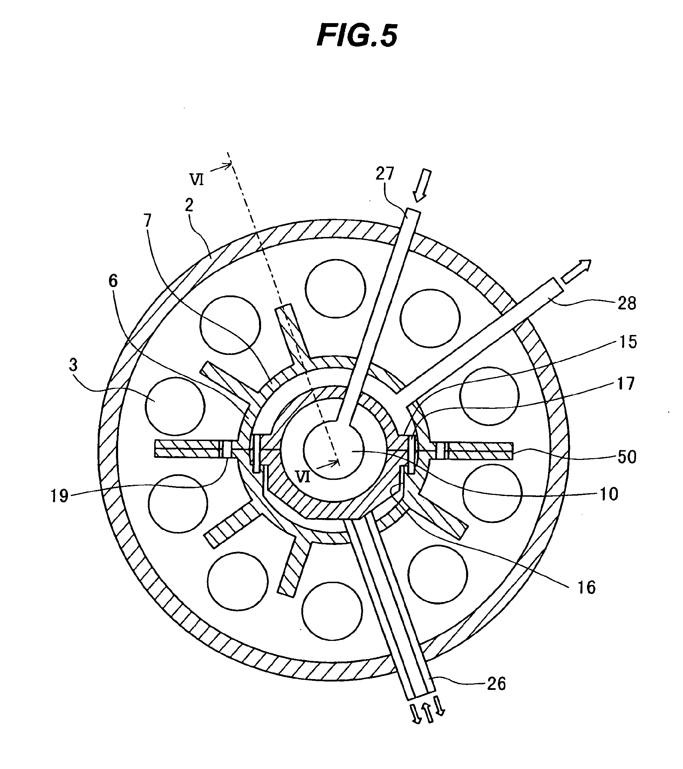

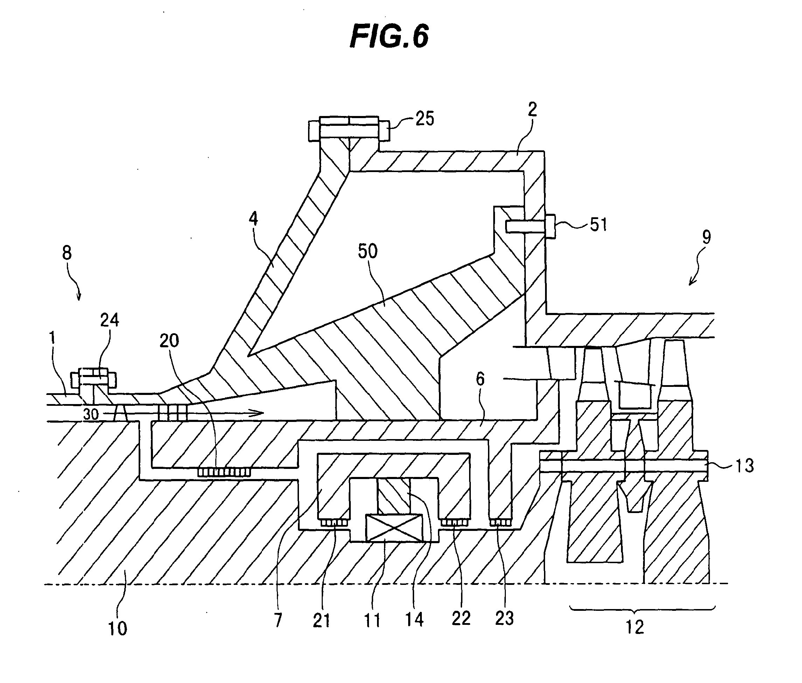

Fig. 5 is a sectional view showing a known bearing support structure in a gas turbine, and Fig. 6 is a sectional view taken along the line VI-VI in Fig. 5. Note that, in Figs. 5 and 6, similar components to those in Figs. 1 to 4 are denoted by the same symbols and a description thereof is omitted here.

In the known bearing support structure in the gas turbine, as shown in Figs. 5 and 6, it is general that struts 50 for supporting the bearing 11 are connected at their upstream ends integrally to the delivery casing 4 and fastened at their downstream ends to the turbine casing 2 by bolts 51. Therefore, the number of parts is increased, and troublesome work is required for assembly and disassembly, including alignment of bolt holes in the turbine casing 2 and the struts 50, tightening of the bolts 51, etc.

On the other hand, in this embodiment, the struts 5 for supporting the bearing box 7 are integral with the delivery casing 4 and the inner barrel 6, and are supported only by the delivery casing 4. Comparing with the known bearing support structure, therefore, the number of parts is reduced. Further, because of no necessity of bolting the struts 5 to the turbine casing 2, troublesome work such as alignment of bolt holes and tightening of bolts are no longer required, whereby the assembly and disassembly work can be facilitated. Consequently, it is possible to shorten a time required for manufacturing and maintenance of the gas turbine, and to cut the cost of manufacturing and maintenance.

In an ordinary gas turbine, when employing a plurality of combustors, the number of combustors is even from the viewpoint of symmetrical arrangement. Also, in a gas turbine for heavy duty, a casing is usually split into two parts in the vertical direction. In the known structure, therefore, the combustors 3 are generally arranged to position offset from the horizontally extending centerline. Eventually, as shown in Fig. 5 by way of example, the combustors 3 are arranged such that two of the combustors are positioned on the vertically extending centerline. With the known bearing support structure having such an arrangement, the oil supplying and discharging pipe 26 cannot be connected to the bearing box from below in the vertical direction, and it is disposed to extend obliquely, by way of example, as shown in Fig. 5. Accordingly, a satisfactory oil-discharging characteristic is not obtained in some cases.

On the other hand, in this embodiment, since the combustors 3 are arranged as described above, any combustor 3 is avoided from positioning on the vertically extending centerline at least in the lower half side. Therefore, the oil supplying and discharging pipe 26 can be connected to the lower side of the bearing 11 in the vertical direction, as shown in Fig. 1. This arrangement ensures smooth supply and discharge of the lubricant to and from the bearing 11.

Further, the struts 5 are each disposed between two adjacent ones of the combustors 3. In the known structure, because the combustors 3 are usually arranged such that they are positioned offset from the horizontally extending centerline to provide a vertically symmetrical and balanced layout, the struts 50 are eventually arranged to position on the horizontally extending centerline. For that reason, it is general in the known structure that the struts 50 positioned on the horizontally extending centerline are each split into two parts in the vertical direction (see Fig. 5), or they are positioned offset and connected to one of the upper and lower casings (e.g., the inner barrel 6). However, splitting of the strut 50 reduces the strength of the bearing support structure, thus resulting in a possibility that rotor rotation is brought into an unbalanced state and stability deteriorates. Also, in the case of slightly shifting the positions of the horizontally extending struts 50 in the circumferential direction and connecting those struts to only one of the upper and lower casings, the intervals between the struts 50 in the circumferential direction become not uniform. Therefore, the compressed air 30 flowing from the compressor 8 to the combustors 3 may generate a drift and may cause a variation in combustion states of the combustors 3.

On the other hand, in this embodiment, since any strut 5 is not positioned on the horizontally extending centerline as shown in Fig. 1, there are neither the necessity of splitting the strut 5, nor the necessity of shifting the position of the strut 5. Stated another way, since the struts 5 can be arranged at uniform intervals in the circumferential direction, it is possible to increase the strength reliability, suppress the generation of a drift in the compressed air 30, and to improve the fluid performance. Further, in this embodiment, the oil (lubricant) supplying and discharging pipe 26 and the sealing air inlet and outlet pipes 27, 28 are arranged in the balanced layout in the circumferential direction as shown in Fig. 1, and this arrangement is also effective in suppressing the generation of a drift in the compressed air 30 flowing from the compressor 8 to the combustors 3. As a result, the combustion states in the combustors 3 can be kept uniform, and more stable operation can be realized.

In addition, according to this embodiment, the axial length L1 of the joined portion of the strut 5 to the inner barrel 6 is set larger than an axial length L2 of the bearing box 7 such that the strut 5 completely covers the axial length of the bearing box 7, and the length L3 of the joined portion of the strut 5 to the delivery casing 4 is set larger than the diameter D of the combustor 3. Hence, the bearing box 7 can be supported in a sufficiently stable manner from the viewpoint of strength, and stability of the rotor rotation can be improved.

The bearing support structure of the present invention is applicable to not only a one-shaft gas turbine, but also a two-shaft gas turbine. Further, while the turbine 9 is shown in Figs. 2 to 4 as having a center hole formed in a disk wheel of a rotor in the initial stage, the present invention can be applied to a gas turbine having any design layout so long as the gas turbine has a bearing for supporting a shaft between a compressor and a turbine regardless of whether a center hole is formed in a disk wheel of a turbine rotor or not. In any application mode, the present invention can provide similar advantages to those described above.

## Claims

1. A gas turbine comprising
- a compressor casing (1),
- a turbine casing (2),
- a delivery casing (4) positioned between said compressor casing (1) and said turbine casing (2) and holding a plurality of combustors (3) arranged in the circumferential direction,
- struts (5) being fastened to said delivery casing (4) and supported only by said delivery casing
- an inner barrel (6) supported by said struts (5) from the radially outer side,
- a bearing box (7) supported by said inner barrel (6), and
- a bearing (11) for journaling a shaft (10) disposed between a compressor (8) and a turbine (9), said bearing (11) being supported by said struts (5) through said inner barrel (6) and said bearing box (7),
**characterized in that**
- an axial length (L₁) of a joined portion of said each strut (5) to said inner barrel (6) is set larger than an axial length (L₂) of said bearing box, and
- a length (L₃) of a joined portion of said each strut (5) to said delivery casing (4) in the lengthwise direction thereof is set larger than a diameter D of said combustor (3).

2. Gas turbine according to claim 1,
**characterized in that**
when an even number of combustors (3) are held with respect to said delivery casing (4), said combustors are arranged at substantially equal intervals in the circumferential direction such that opposing two of said combustors are positioned on a horizontally extending centerline, and when an odd number of combustors (3) are held, said combustors are arranged at substantially equal intervals in the circumferential direction such that one of said combustors is positioned on a vertically extending centerline in the upper half side.

3. Gas turbine according to claim 2,
**characterized in that**
an oil supplying and discharging pipe (26) for supplying and discharging oil to and from said bearing (11), an inlet pipe (27) for introducing bearing sealing air, and an outlet pipe (28) for discharging the bearing sealing air are arranged in a balanced layout in the circumferential direction.

4. Gas turbine according to one of the preceding claims,
**characterized in that**
the bearing box (7) is provided with flanges (15) projecting along a horizontally extending centerline and said flanges (15) are supported by engaging portions (16) formed on an inner peripheral surface of the inner barrel (6).

5. Gas turbine according to one of the preceding claims,
**characterized in that**
the structure of the inner barrel (6) and of the bearing box (7) is split into two parts in the vertical direction and the inner barrel (6) is provided with horizontally extending flanges (18) which are fastened together by bolts (19) so that the inner barrel (6) is formed into a ring-like shape.

6. Gas turbine according to claim 5,
**characterized in that**
seals (20 to 23) are disposed in gaps between the inner barrel (6) and the shaft (10) and in gaps between the bearing box (7) and the shaft (10).

7. Gas turbine according to one of the preceding claims,
**characterized in that**
the plurality of struts (5) are arranged at predetermined intervals in the circumferential direction and are formed integrally with the delivery casing (4) and the inner barrel (6) by, e.g., casting.

8. Gas turbine according to one of the preceding claims,
**characterized in that**
the bearing box (7) is located within a range of the axial length (L₁) of the strut (5) so that the joined portion between the strut (5) and the inner barrel (6) completely covers the axial length of the bearing box (7).

9. Gas turbine according to claim 2 or 3,
**characterized in that**
an oil supplying and discharging pipe (26) is connected to the bearing box (7) from below in the vertical direction.

10. Gas turbine according to claim 9,
**characterized in that**
the inlet and the outlet pipe (27; 28) for introducing and for discharging bearing sealing air are disposed in the upper half side of the turbine casing (2) at positions symmetrical in the transverse direction.

## Patentansprüche

1. Gasturbine mit
- einem Kompressorgehäuse (1),
- einem Turbinengehäuse (2),
- einem Zuführgehäuse (4) zwischen dem Kompressorgehäuse (1) und dem Turbinengehäuse (2), das eine Mehrzahl an in Umfangsrichtung angeordneten Brennern (3) enthält,
- an dem Zuführgehäuse (4) befestigten Streben (5), die nur von dem Zuführgehäuse getragen sind,
- einer von den Streben (5) radial außen getragenen Innentrommel (6),
- einem von der Innentrommel (6) getragenen Lagerkörper (7) und
- einem Lager (11) zur Drehlagerung einer zwischen einem Kompressor (8) und einer Turbine (9) angeordneten Welle (10), das von den Streben (5) über die innere Trommel (6) und den Lagerkörper (7) getragen wird,
**dadurch gekennzeichnet, dass**
- eine axiale Länge (L₁) eines Verbindungsteils jeder Strebe (5) mit der Innentrommel (6) größer als die axiale Länge (L₂) des Lagerkörpers ist und
- die Länge (L₃) eines Verbindungsteils jeder Strebe (5) mit dem Zuführgehäuse (4) in Längsrichtung größer als ein Durchmesser D des Brenners (3) ist.

2. Gasturbine nach Anspruch 1,
**dadurch gekennzeichnet, dass**
wenn eine gerade Anzahl an Brennern (3) im Zuführgehäuse (4) vorgesehen ist, diese Brenner in Umfangsrichtung in etwa gleichen Abständen angeordnet sind, sodass zwei gegenüberliegende dieser Brenner auf einer horizontalen Mittellinie positioniert sind, und wenn eine ungerade Anzahl an Brennern (3) vorgesehen ist, diese Brenner in Umfangsrichtung in etwa gleichen Abständen angeordnet sind, sodass einer der Brenner auf einer vertikalen Mittellinie in der oberen Hälfte angeordnet ist.

3. Gasturbine nach Anspruch 2,
**dadurch gekennzeichnet, dass**
ein Öl-Speise- und -Ablaufrohr (26) zum Zuführen und Ablassen von Öl zu und aus dem Lager (11), ein Einlassrohr (27) zum Einführen von Lagerdichtungsluft und ein Auslassrohr (28) zum Ablassen der Lagerdichtungsluft in Umfangsrichtung in einer ausgeglichenen Ausgestaltung angeordnet sind.

4. Gasturbine nach einem der vorstehenden Ansprüche,
**dadurch gekennzeichnet, dass**
der Lagerkörper (7) Flansche (15) aufweist, die sich längs einer horizontalen Mittellinie erstrecken und von Eingriffsteilen (16) getragen sind, die an der inneren Umfangsfläche der Innentrommel (6) angeformt sind.

5. Gasturbine nach einem der vorstehenden Ansprüche,
**dadurch gekennzeichnet, dass**
die Struktur der Innentrommel (6) und des Lagerkörpers (7) vertikal in zwei Teile aufgeteilt ist und die Innentrommel (6) durch Bolzen (19) zusammengebaute horizontale Flansche (18) aufweist, sodass die Innentrommel (6) in einer ringartigen Form ausgebildet ist.

6. Gasturbine nach Anspruch 5,
**dadurch gekennzeichnet, dass**
Dichtungen (20 bis 23) in Spalten zwischen der Innentrommel (6) und der Welle (10) sowie in Spalten zwischen dem Lagerkörper (7) und der Welle (10) angeordnet sind.

7. Gasturbine nach einem der vorstehenden Ansprüche,
**dadurch gekennzeichnet, dass**
die Vielzahl der Streben (5) in Umfangsrichtung in vorgegebenen Abständen angeordnet sind und integral mit dem Zuführgehäuse (4) und der Innentrommel (6) z.B. durch Gießen gebildet sind.

8. Gasturbine nach einem der vorstehenden Ansprüche,
**dadurch gekennzeichnet, dass**
der Lagerkörper (7) in einem Bereich der axialen Länge (L₁) der Strebe (5) angeordnet ist, sodass der Verbindungsteil zwischen der Strebe (5) und der Innentrommel (6) die axiale Länge des Lagerkörpers (7) vollständig überdeckt.

9. Gasturbine nach Anspruch 2 oder 3,
**dadurch gekennzeichnet, dass**
eine Öl-Speise- und Ablaufrohr (26) mit dem Lagerkörper (7) in vertikaler Richtung von unten verbunden ist.

10. Gasturbine nach Anspruch 9,
**dadurch gekennzeichnet, dass**
die Einlass- und die Auslassleitung (27; 28) zum Einführen und zum Ablassen von Lagerdichtungsluft in der oberen Hälfte des Turbinengehäuses (2) in in Querrichtung symmetrischen Positionen angeordnet sind.

## Revendications

1. Turbine à gaz comprenant :
- un carter de compresseur (1),
- un carter de turbine (2),
- un carter de refoulement (4) disposé entre ledit carter de compresseur (1) et ledit carter de turbine (2), et supportant une pluralité de brûleurs (3) disposés sur la circonférence,
- des montants (5) étant fixés sur ledit carter de refoulement (4) et supportés exclusivement par ledit carter de refoulement,
- un tambour intérieur (6) supporté par lesdits montants (5) sur son côté extérieur radialement,
- une boîte à palier (7) supportée par ledit tambour intérieur (6), et
- un palier (11) pour la portée d'un arbre (10) monté entre un compresseur (8) et une turbine (9), ledit palier (11) étant supporté par lesdits montants (5) au travers dudit tambour intérieur (6) et de ladite boîte à palier (7),
**caractérisée en ce que**
- une longueur axiale (L₁) allant d'une partie de jonction de chacun desdits montants (5) audit tambour intérieur (6) est supérieure à une longueur axiale (L₂) allant de ladite boîte à palier (7), et
- une longueur (L₃) allant d'une partie de jonction de chacun desdits montants (5) audit carter de refoulement (4) sur l'axe longitudinal de ce dernier est prévue supérieure à un diamètre D dudit brûleur (3).

2. Turbine à gaz selon la revendication 1,
**caractérisée en ce que**
si les brûleurs (3) sont supportés en nombre pair par rapport audit carter de refoulement (4), lesdits brûleurs sont disposés à des intervalles sensiblement égaux sur la circonférence de telle manière que deux desdits brûleurs opposés sont disposés sur un axe pouvant s'étendre horizontalement, et que si les brûleurs (3) sont supportés en nombre impair, lesdits brûleurs sont disposés à des intervalles sensiblement égaux sur la circonférence de telle manière qu'un desdits brûleurs se trouve disposé sur un axe pouvant s'étendre verticalement dans la moitié supérieure.

3. Turbine à gaz selon la revendication 2,
**caractérisée en ce que**
un conduit d'amenée et d'évacuation d'huile (26) pour l'alimentation en huile et l'évacuation d'huile dudit palier (11), un conduit d'admission (27) pour l'admission de l'air d'étanchéité du palier, et un conduit d'échappement (28) pour l'évacuation de l'air d'étanchéité du palier sont disposés suivant un agencement équilibré sur la circonférence.

4. Turbine à gaz selon l'une des revendications précédentes,
**caractérisée en ce que**
la boîte à palier (7) est prévue avec des brides (15) saillantes sur un axe pouvant s'étendre horizontalement, et **en ce que** lesdites brides (15) sont maintenues par des parties d'engagement (16) formées sur une surface périphérique intérieure du tambour intérieur (6).

5. Turbine à gaz selon l'une des revendications précédentes,
**caractérisée en ce que**
la structure du tambour intérieur (6) et de la boîte à palier (7) est divisée en deux parties dans la direction verticale, et **en ce que** le tambour intérieur (6) est prévu avec des brides (18) pouvant s'étendre horizontalement, lesquelles sont fixées entre elles par des boulons (19) de telle manière que le tambour intérieur (6) présente une forme annulaire.

6. Turbine à gaz selon la revendication 5,
**caractérisée en ce que**
des joints (20 à 23) sont disposés dans des interstices entre le tambour intérieur (6) et l'arbre (10), et dans des interstices entre la boîte à palier (7) et l'arbre (10).

7. Turbine à gaz selon l'une des revendications précédentes,
**caractérisée en ce que**
les plusieurs montants (5) sont disposés à des intervalles prédéfinis sur la circonférence, et sont formés d'un seul tenant avec le carter de refoulement (4) et le tambour intérieur (6), notamment par moulage.

8. Turbine à gaz selon l'une des revendications précédentes,
**caractérisée en ce que**
la boîte à palier (7) est disposée sur une partie de la longueur axiale (L₁) du montant (5) de telle manière que la partie de jonction entre le montant (5) et le tambour intérieur (6) recouvre entièrement la longueur axiale de la boîte à palier (7).

9. Turbine à gaz selon la revendication 2 ou la revendication 3,
**caractérisée en ce que**
un conduit d'amenée et d'évacuation d'huile (26) est raccordé à la boîte à palier (7) dans la partie basse sur un axe vertical.

10. Turbine à gaz selon la revendication 9,
**caractérisée en ce que**
le conduit d'admission et le conduit d'échappement (27 ; 28) pour l'admission et l'évacuation de l'air d'étanchéité du palier sont prévus dans la moitié supérieure du carter de turbine (2) en position symétrique sur un axe transversal.
